# EUROPEAN PATENT SPECIFICATION

(11) **EP 3 879 882 B1**
(45) Date of publication and mention of the grant of the patent: **20.09.2023**
(21) Application number: 21170237.8
(22) Date of filing: 17.06.2014
(51) Int. Cl.: H04W 36/22, H04W 28/08, H04W 28/02, H04W 36/00, H04W 36/14

(54) **METHOD AND APPARATUS FOR OFFLOADING TRAFFIC FROM CELLULAR TO WLAN USING ASSISTANCE INFORMATION**
VERFAHREN UND VORRICHTUNG ZUR ABLADUNG VON VERKEHR VON MOBILFUNK AN WLAN UNTER VERWENDUNG VON HILFSINFORMATIONEN
PROCÉDÉ ET APPAREIL D'ALLÈGEMENT DE TRAFIC DU CELLULAIRE AU WLAN À L'AIDE D'INFORMATIONS D'ASSISTANCE

(30) Priority: 28.06.2013 US 201361840977 P
(43) Date of publication of application: 15.09.2021
(62) Divisional of application: 14731242.5
(73) Proprietor: Nokia Solutions and Networks Oy, 02610 Espoo (FI)
(72) Inventor: WOLFNER, Gyorgy Tamas, 1163 Budapest (HU); TERVONEN, Janne Petteri, 02630 Espoo (FI); SCHWARZBAUER, Hanns Jürgen, 82194 Gröbenzell (DE); REDANA, Simone, 81541 München (DE)
(74) Representative: Page White Farrer

(56) References cited:
- US-A1- 2010 323 698
- HUAWEI: "[81bis#12][Joint/WiFi] Relation of RAN mechanisms to ANDSF", 3GPP DRAFT; R2-132111 81BIS#12 -JOINT-WIFI - RELATION OF RAN MECHANISMS TO ANDSF, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. RAN WG2, no. Fukuoka; 20130520 - 20130524 20 May 2013 (2013-05-20), XP050700198, Retrieved from the Internet: URL:http://www.3gpp.org/ftp/tsg_ran/WG2_RL 2/TSGR2_82/Docs/ [retrieved on 2013-05-20]
- ALCATEL-LUCENT ET AL: "Analysis of Solution 1", 3GPP DRAFT; R2-132018_ANDSF_V0.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 10 May 2013 (2013-05-10), XP050699978, Retrieved from the Internet: URL:http://www.3gpp.org/ftp/tsg_ran/WG2_RL 2/TSGR2_82/Docs/ [retrieved on 2013-05-10]

## Description

### BACKGROUND:

### Field:

Embodiments of the invention relate to offloading of traffic by a user equipment from a first network to a second network.

### Description of the Related Art:

Long-term Evolution (LTE) is a standard for wireless communication that seeks to provide improved speed and capacity for wireless communications by using new modulation/signal processing techniques. The standard was proposed by the 3^{rd} Generation Partnership Project (3GPP), and is based upon previous network technologies. Since its inception, LTE has seen extensive deployment in a wide variety of contexts involving the communication of data.

Traffic offloading in the telecommunication field generally relates to using complementary network technologies to transmit communication that was planned to be transmitted by a first network.

US2010/0323698A1 discloses a system comprising a component (e.g. ANDSF) that provides a cell selection rule to a UE and a component (e.g. an access node) that provides the UE with information about the load in the cell currently utilised by the UE.

HUAWEI: "Relation of RAN mechanisms to ANDSF", 3GPP Draft, R2-132111, 20 May 2013, discusses the relationship between radio access network (RAN) mechanisms and access network discovery and selection function server (ANDSF) mechanisms. It discloses that ANDSF comprises ISRPs. The ANDSF can make rules specific to certain WLANs, to certain times, or certain locations, for example.

ALCATEL-LUCENT: "Analysis of Solution 1", 3GPP Draft, R2-132018, 10 May 2013, discusses how an operator can control the network selection between 3GPP and WiFi either by provisioning the policy on the UE or sending the policy via ANDSF. These policies can either be inter-system mobility policy (ISMP) or inter-system routing policy (ISRP) depending on the UE capabilities. R2-132018 discloses that an approach is to extend the existing policies to include the 3GPP and WiFi radio related information (inc load information) as part of the condition associated with a routing criteria associated with a rule in the ISRP.

### SUMMARY:

The invention is defined by the independent claims. Preferred embodiments are set out in the dependent claims.

### BRIEF DESCRIPTION OF THE DRAWINGS:

For proper understanding of the invention, reference should be made to the accompanying drawings, wherein:
Fig. 1 illustrates a logic flow diagram of a method according to embodiments of the invention.
Fig. 2 illustrates a logic flow diagram of a method according to embodiments of the invention.
Fig. 3 illustrates an apparatus according to embodiments of the invention.
Fig. 4 illustrates an apparatus according to embodiments of the invention.
Fig. 5 illustrates an apparatus according to embodiments of the invention.
Fig. 6 illustrates a system of apparatuses according to embodiments of the invention.

### DETAILED DESCRIPTION:

Certain embodiments of the present invention relate to using offload indications in conjunction with user-equipment policies.

The Third Generation Partnership Project (3GPP) Radio Layer 2 (RAN2) working group is studying different aspects of 3GPP Wi-Fi technologies. More specifically, one area of study relates to methods of steering communication of user equipment (UEs) towards wireless local-area networks (WLANs) in the event of 3GPP Radio-Access Network (RAN) overload. Examples of user equipment may comprise, but are not limited to, a mobile device, handset, mobile phone, personal-digital assistant, smart phone, or other personal electronic/computing device. By steering UEs toward WLANs in the event of 3GPP RAN overload, the traffic corresponding to the steered UEs can be offloaded from the 3GPP RAN onto the WLANs, i.e., the traffic of the steered UEs is transferred via WLANs instead of 3GPP RAN. Some results of the conducted studies have been documented in 3GPP Technical Report (TR) 37.834 version 0.3.0.

An Access Network Discovery and Selection Function (ANDSF) has been specified within 3GPP Technical Specification (TS) 23.402 version 12.1. ANDSF can provide policies to UEs regarding when the UEs are to use accessible WLANs, and which WLANs are preferable for use by the UEs. In the future, 3GPP RAN2 may further define how 3GPP-WiFi interworking will be implemented when ANDSF policies are available (and used) by the UE.

As described above, an ANDSF server may provide policies to UEs. However, an ANDSF server generally may be not suitable to dynamically provide policy-updates to the UEs. In other words, the policies used by UEs generally may not be immediately updated, such as at a time that a RAN overload occurs.

In the currently proposed approaches, assistant information may be sent to the UEs to allow the UEs to properly respond to a RAN overload. For example, according to Solution 2 described within Section 6.1.2 of TR 37.834 (version 0.3.0), assistant information provided by a RAN may be used with ANDSF. According to Solution 2, "If the UE utilizes ANDSF policy, the UE Access Stratum may forward the received assistant information to the interworking upper layer of the UE."

However, Solution 2 provides only a general indication that assistant information provided by a RAN can be used with ANDSF. Solution 2, as described in the current version of the Technical Report, does not describe specifics as to how the assistant information may be used with ANDSF.

In another previous approach, according to Hotspot 2.0 specifications determined by the Wi-Fi Alliance, specifications of Hotspot 2.0 may help UEs to perform WLAN network discovery and selection. One example of information that UEs can use to perform WLAN network selection is WLAN load information. As an example of WLAN load information, a threshold may be given in the Hotspot 2.0 policies to indicate to WLAN hosts when a WLAN, identified by the policies, may be selected.

In view of the above difficulties, and in contrast with the previous approaches, embodiments of the present invention may be used in conjunction with UEs that have policies for traffic routing and that receive offloading assistance information. For example, certain embodiments may be directed to UEs that have ANDSF Inter-System Routing Policies (ISRPs) policies for traffic routing, and the UEs may receive WLAN offloading assistance information. The UEs may receive WLAN offloading assistance information from 3GPP RAN base stations, i.e., eNode Bs. In certain embodiments, policies can be determined by an ANDSF server. In other embodiments, policies can be provided by a network operator and then transmitted by the ANDSF server to UEs.

In certain embodiments of the invention, ANDSF Inter-System Routing Policy (ISRP) flow distribution rules may further comprise a new type of validity condition that may be related to the values contained within WLAN offloading assistance information received by the UE (from the 3GPP RAN). In other words, the ANDSF ISRPs may refer to values contained within the WLAN offloading assistance information, and may direct the UE according to the policies and the received WLAN offloading assistance information.

If the WLAN offloading assistance information may comprise a load condition for the 3GPP RAN load (corresponding to the amount of traffic that may be transmitted by the currently serving 3GPP RAN node), the new validity conditions may determine which ISRP flow distribution rule is applicable for a specific 3GPP RAN load condition, as described in more detail below.

As such, an operator may define a multiplicity of ISRP flow distribution rules which may give different priorities to the 3GPP RAN networks and to the WLAN access networks whose validity condition may be used to select a specific ISRP flow distribution rule then dependent on the 3GPP RAN load and other parameters provided by the 3GPP RAN. Therefore, the different ISRP rules and their flow distribution rule may be defined well in advance without need to frequently update the ANDSF policies, and the actual ISRP and flow distribution rule selected by the UE may be dynamically adapted to the load condition of the 3GPP RAN.

Each ISRP flow distribution rule may comprise traffic identification, validity conditions, and/or a prioritized list of accesses. Traffic identification may comprise IP filters, Fully Qualified Domain Names (FQDN) may describe the service, or operating system-specific unique application identifier. Validity conditions may be based on a time of day and/or a location. The above-described new validity condition may take into account RAN info/load status.

ISRP validity conditions may comprise public land mobile network (PLMN) and roaming status. In other words, the validity of a certain ISRP rule may be evaluated based on the registered PLMN of the UE, and whether the UE is roaming or not. Within an ISRP rule, there may be multiple flow distribution rules, that each may have separate validity conditions. A flow-distribution-rule validity condition may then take into account a current time of day and location. Certain embodiments of the invention may add new validity conditions to ISRP flow distribution rules to take into account RAN info/load status.

In certain embodiments, the RAN may provide load information/condition corresponding to one of the following values: "RAN load high", "RAN load is normal", and "RAN load is low", for example. Although the present example comprises three different load conditions, other embodiments may contain more or less load conditions. (e.g. expressing the load in a value or a percentage). In circumstances corresponding to "RAN load high" an operator may generally prefer to offload traffic from the RAN to another access network (such as a WLAN access network). In circumstances corresponding to "RAN load is normal" an operator may generally like to implement normal offloading behavior. For example, the operator may decide to offload the traffic to a WLAN access network, if the WLAN access network belongs to the operator. In circumstances corresponding to "RAN load is low" the operator may generally like to avoid offloading traffic from the RAN.

Further, embodiments of the present invention may use different designations to identify each accessible WLAN. In certain embodiments, the designation "SSID1" may act as an identifier of WLANs of the 3GPP operator, while the designation "SSID2" may act as an identifier of WLANs of a roaming partner of the 3GPP operator. Although "SSID1" and "SSID2" are specifically mentioned, these designations are merely exemplary designations. In fact, any type of WLAN identifier that is allowed by current or future ANDSF specifications, also other than SSIDs, may be used to identify accessible WLANs.

In certain embodiments, an operator may configure a UE to operate based on the amount of traffic load that is on a RAN. ISRPs may enable operators to define different priorities of access networks that depend on the traffic type. A filter rule may define that WLANs are preferred over 3GPP RAN for HTTP traffic, while another rule may define that in case of traffic related to an operator service (e.g., Voice over IP service) 3GPP RAN is preferred over WLANs. Specifically, IP level filters or other filter types that are supported by current or future ANDSF specifications may be used. As a first example of UE operation, when the 3GPP RAN is overloaded, then UEs may use any WLAN (either of SSID1 and SSID2, for example) to offload traffic, if WLANs are available. In one embodiment, WLANs identified by SSID1 may be assigned a higher priority for offloading onto as compared to WLANs identified by SSID2.

As a second example of UE operation, when the 3GPP RAN is encountering normal traffic loads, the UE may offload traffic to the operator's WLAN (SSID1) from 3GPP RAN, if the operator's WLAN is available.

As a third example of UE operation, when the 3GPP RAN is encountering low traffic loads, the UE may prefer 3GPP RAN over any WLAN.

In order to enable the UEs to achieve the above-described operation, certain embodiments of the present invention may implement the functionality of the following pseudo-code within the policies provided to the UE.
IF <"RAN load high (offload)"> THEN
SSID1 = priority 1
SSID2 = priority 2
3GPP RAN = priority 3

IF <" RAN load is normal (normal offloading behavior)"> THEN
SSID1 = priority 1
3GPP RAN = priority 2
SSID2 = priority 3

IF <" RAN load is low (avoid offloading)"> THEN
3GPP RAN = priority 1
SSID1 = priority 2
SSID2 = priority 3

As described above, in certain embodiments, the 3GPP RAN may provide a RAN load indication (or WLAN offload indication) to the 3GPP UE. However, other embodiments may also utilize assistance information that is more complex than the information provided by the RAN.

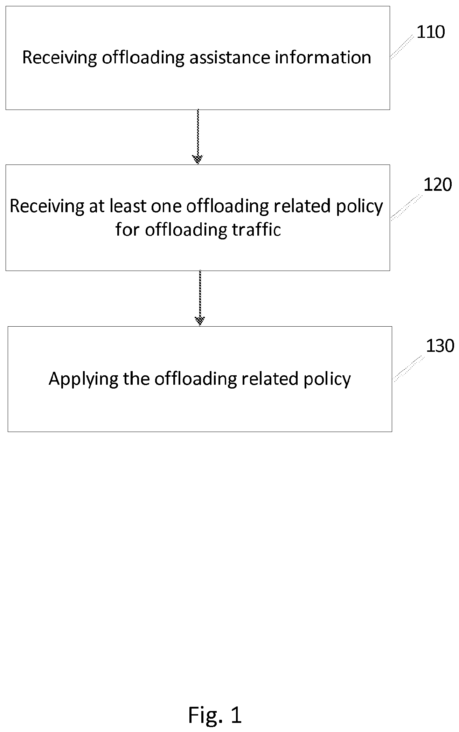

Fig. 1 illustrates a logic flow diagram of a method according to certain embodiments of the invention. The method in Fig. 1 comprises, at 110, receiving, by a user equipment, offloading assistance information from a network element of a first network. The method also comprises, at 120, receiving, by the user equipment, at least one offloading related policy for offloading traffic to at least one second network. The offloading related policy comprises a policy validity criterion that takes the offloading assistance information into account. The method comprises, at 130, applying the offloading related policy in the user equipment if the policy validity criterion is met.

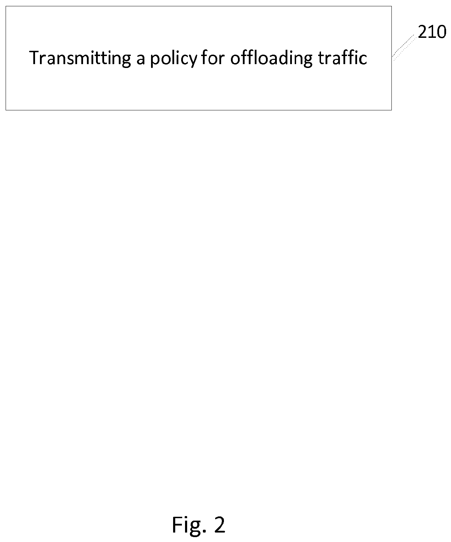

Fig. 2 illustrates a logic flow diagram of a method according to certain embodiments of the invention. The method illustrated in Fig. 2 comprises, at 210, transmitting, by a network element, a policy for offloading traffic from a first network to at least one second network to a user equipment. The policy for offloading traffic comprises a policy validity criterion taking offloading assistance information from the first network into account. The first network may be any type of access network. In certain embodiments, the first network may be a 3GPP radio access network.

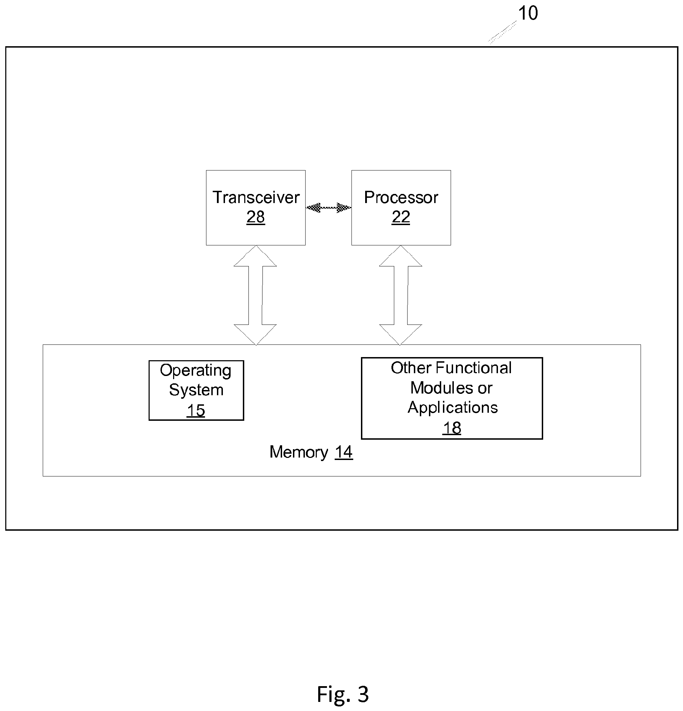

Fig. 3 illustrates an apparatus 10 according to embodiments of the invention. Apparatus 10 may be a receiving device, such as a UE, for example. In other embodiments, apparatus 10 may be a server or any other network node, for example.

Apparatus 10 may comprise a processor 22 for processing information and executing instructions or operations. Processor 22 may be any type of general or specific purpose processor. While a single processor 22 is shown in Fig. 3, multiple processors may be utilized according to other embodiments. Processor 22 may also comprise one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 may further include a memory 14, coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 may be comprised of any combination of random access memory (RAM), read only memory (ROM), static storage such as a magnetic or optical disk, or any other type of non-transitory machine or computer readable media. The instructions stored in memory 14 may comprise program instructions or computer program code that, when executed by processor 22, enable the apparatus 10 to perform tasks as described herein.

Apparatus 10 may also comprise one or more antennas (not shown) for transmitting and receiving signals and/or data to and from apparatus 10. Apparatus 10 may further comprise a transceiver 28 that modulates information on to a carrier waveform for transmission by the antenna(s) and demodulates information received via the antenna(s) for further processing by other elements of apparatus 10.

Processor 22 may perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In certain embodiments, memory 14 may store software modules that provide functionality when executed by processor 22. The modules may comprise an operating system 15 that provides operating system functionality for apparatus 10. The memory may also store one or more functional modules 18, such as an application or program, to provide additional functionality for apparatus 10. The components of apparatus 10 may be implemented in hardware, or as any suitable combination of hardware and software.

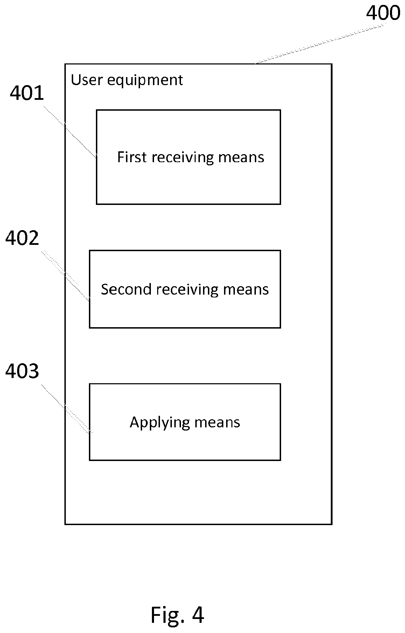

Fig. 4 illustrates an apparatus 400 according to other embodiments of the invention. Apparatus 400 may be, for example, a user equipment. Apparatus 400 may comprise first receiving means 401 for receiving offloading assistance information from a network element of a first network. Apparatus 400 may also comprise second receiving means 402 for receiving at least one offloading related policy for offloading traffic to at least one second network. The offloading related policy may comprise a policy validity criterion that takes the offloading assistance information into account. The apparatus 400 may also comprise an applying means 403 for applying the offloading related policy in the apparatus 400 if the policy validity criterion is met.

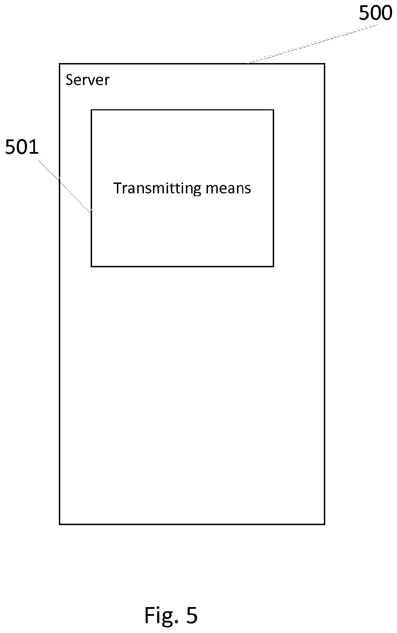

Fig. 5 illustrates an apparatus 500 according to other embodiments of the invention. In certain embodiments, apparatus 500 may correspond to a server. Apparatus 500 may comprise a transmitting means 501 for transmitting a policy for offloading traffic from a first network to at least one second network to a user equipment. The policy for offloading traffic may comprise a policy validity criterion taking offloading assistance information from the first network into account.

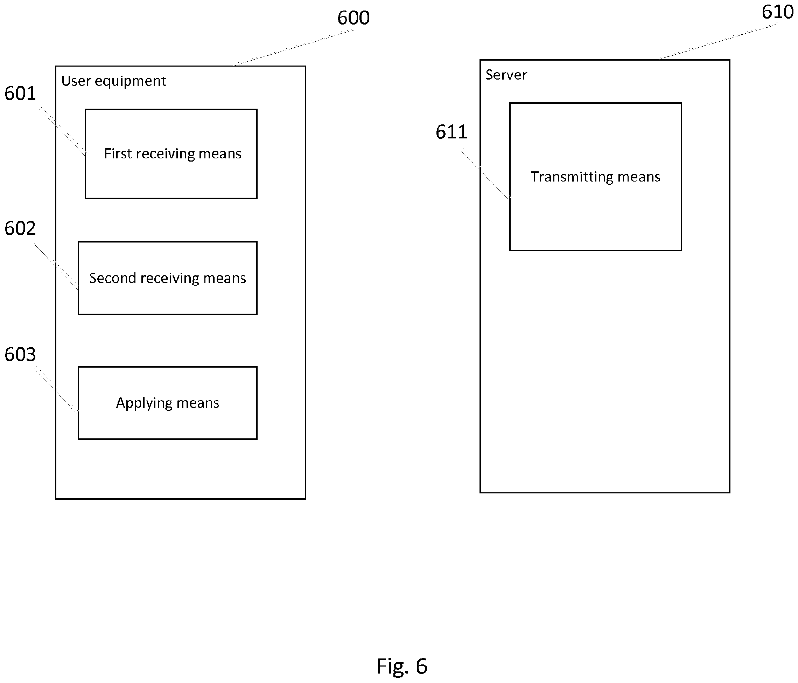

Fig. 6 illustrates a system of apparatuses according to embodiments of the invention. The system may comprise a user equipment 600 and a server 610.

The user equipment 600 may comprise first receiving means 601 for receiving offloading assistance information from a network element of a first network. User equipment 600 may also comprise second receiving means 602 for receiving at least one offloading related policy for offloading traffic to at least one second network. The offloading related policy may comprise a policy validity criterion that may take the offloading assistance information into account. User equipment 600 may also comprise applying means 603 for applying the offloading related policy in user equipment 600 if the policy validity criterion is met.

Server 610 may comprise a transmitting means 611 for transmitting the at least one offloading related policy for offloading traffic from the first network to the at least one second network to the user equipment 600.

The described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention.

## Claims

1. A method performed by a user equipment, comprising:
receiving (110), from a network element of a radio access network, load information of the radio access network;
receiving (120), from an access network discovery and selection function server, at least one offloading related policy for offloading traffic to at least one wireless local access network, wherein the offloading related policy comprises: a plurality of inter-system routing policy flow distribution rules each having a policy validity condition that takes the load information of the radio access network into account,
wherein the plurality of inter-system routing policy flow distribution rules define different priorities for offloading traffic to the at least one wireless local access network dependent on the traffic type;
using the policy validity conditions to select one of the plurality of inter-system routing policy flow distribution rules based on: the received load information; and
applying (130) the selected inter-system routing policy flow distribution rule of the offloading related policy in the user equipment when the respective policy validity condition is met, to set the priorities for offloading received traffic to the least one wireless local access network dependent on the traffic type of the received traffic.

2. An apparatus in a user equipment, the apparatus comprising at least one processor and at least one memory comprising computer program code, the at least one memory and the computer program code are configured to, with the at least one processor, cause the apparatus at least to:
receive (110), from a network element of a radio access network, load information of the radio access network;
receive (120), from an access network discovery and selection function server, at least one offloading related policy for offloading traffic to at least one wireless local access network, wherein the offloading related policy comprises: a plurality of inter-system routing policy flow distribution rules each having a policy validity condition that takes the load information of the radio access network into account,
wherein the plurality of inter-system routing policy flow distribution rules define different priorities for offloading traffic to the at least one wireless local access network dependent on the traffic type;
use the policy validity conditions to select one of the plurality of inter-system routing policy flow distribution rules based on the received load information; and
apply (130) the selected inter-system routing policy flow distribution rule of the offloading related policy in the user equipment when the policy validity condition is met, to set the priorities for offloading received traffic to the least one wireless local access network dependent on the traffic type of the received traffic.

3. The apparatus according to claim 2, wherein load information comprises:
an indication of whether a load of the first network is high, normal, or low.

4. The apparatus according to any of claims 2 to 3, wherein the offloading related policy comprises identification information of the at least one wireless local access network and related load information.

5. The apparatus according to any of claims 2 to 4, wherein at least two offloading related policies are received and wherein only one of the received offloading related policies is applied at a time.

6. The apparatus according to any of claims 2 to 5, wherein the network element of the radio access network is a base station.

7. A computer program product, embodied on a non-transitory computer readable medium, the computer program product configured to control a processor of a user equipment to perform a method according to the steps of claim 1.

8. A method performed by an access network discovery and selection function server, the method comprising:
transmitting (210), to a user equipment, a policy for offloading traffic from a radio access network to at least one wireless local area network, wherein the policy for offloading traffic comprises: a plurality of inter-system routing policy flow distribution rules each having a policy validity condition that takes the load information of the radio access network into account, such that the user equipment can use the policy validity conditions to select one of the plurality of inter-system routing policy flow distribution rules based on received load information,
wherein the plurality of inter-system routing policy flow distribution rules define different priorities for offloading traffic to the at least one wireless local access network dependent on the traffic type.

9. An apparatus in an access network discovery and selection function server, the apparatus comprising at least one processor and at least one memory comprising computer program code, the at least one memory and the computer program code are configured to, with the at least one processor, cause the apparatus at least to:
transmit (210), to a user equipment, a policy for offloading traffic from a radio access network to at least one wireless local area network, wherein the policy for offloading traffic comprises: a plurality of inter-system routing policy flow distribution rules each having a policy validity condition that takes the load information of the radio access network into account, such that the user equipment can use the policy validity conditions to select one of the plurality of inter-system routing policy flow distribution rules based on received load information,
wherein the plurality of inter-system routing policy flow distribution rules define different priorities for offloading traffic to the at least one wireless local access network dependent on the traffic type.

10. The apparatus according to claim 9, wherein the offloading related policy comprises identification information of the at least one wireless local area network and related offloading priority information.

11. The apparatus according to claim 9 or 10, wherein the at least one memory and the computer program code are configured to, with the at least one processor, cause the apparatus to transmit at least two policies for offloading traffic, wherein the policy validity criterion of each policy are exclusive and allow the applying of only one policy at a time.

12. A method comprising:
transmitting (110), from a network element of a radio access network to a user equipment, load information of the radio access network;
transmitting (120, 210), from an access network discovery and selection function server to the user equipment, at least one offloading related policy for offloading traffic to at least one wireless local access network, wherein the offloading related policy comprises: a plurality of inter-system routing policy flow distribution rules each having a policy validity condition that takes the load information of the radio access network into account,
wherein the plurality of inter-system routing policy flow distribution rules define different priorities for offloading traffic to the at least one wireless local access network dependent on the traffic type;
using, at the user equipment, the policy validity conditions to select one of the plurality of inter-system routing policy flow distribution rules based on: the received load information; and
applying (130), at the user equipment, the selected inter-system routing policy flow distribution rule of the offloading related policy in the user equipment when the respective policy validity condition is met, to set the priorities for offloading received traffic to the least one wireless local access network dependent on the traffic type of the received traffic.

13. A system comprising:
a user equipment;
a network element of a radio access network; and
an access network discovery and selection function server,
wherein a first apparatus in the network element comprising at least one processor and at least one memory comprising computer program code, the at least one memory and the computer program code are configured to, with the at least one processor, cause the first apparatus at least to: transmit (110), to a user equipment, load information of the radio access network,
wherein a second apparatus in the access network discovery and selection function server comprising at least one processor and at least one memory comprising computer program code, the at least one memory and the computer program code are configured to, with the at least one processor, cause the second apparatus at least to: transmit (120, 210), to the user equipment, at least one offloading related policy for offloading traffic to at least one wireless local access network, wherein the offloading related policy comprises: a plurality of inter-system routing policy flow distribution rules each having a policy validity condition that takes the load information of the radio access network into account, wherein the plurality of inter-system routing policy flow distribution rules define different priorities for offloading traffic to the at least one wireless local access network dependent on the traffic type,
wherein a third apparatus in the user equipment comprising at least one processor and at least one memory comprising computer program code, the at least one memory and the computer program code are configured to, with the at least one processor, cause the third apparatus at least to: use the policy validity conditions to select one of the plurality of inter-system routing policy flow distribution rules based on: the received load information; and apply (130) the selected inter-system routing policy flow distribution rule of the offloading related policy in the user equipment when the respective policy validity condition is met, to set the priorities for offloading received traffic to the least one wireless local access network dependent on the traffic type of the received traffic.

## Patentansprüche

1. Verfahren, das von einer Teilnehmereinrichtung durchgeführt wird und Folgendes umfasst:
Empfangen (110) von Auslastungsinformationen eines Funkzugangsnetzwerks von einem Netzwerkelement des Funkzugangsnetzwerks;
Empfangen (120) von mindestens einer auslagerungsbezogenen Richtlinie zum Auslagern von Verkehr in mindestens ein drahtloses lokales Zugangsnetzwerk von einem Server mit Zugangsnetzwerkentdeckungs- und -auswahlfunktion, wobei die auslagerungsbezogene Richtlinie Folgendes umfasst: eine Vielzahl von Intersystemroutingrichtlinienflussverteilungsregeln, von denen jede eine Richtliniengültigkeitsbedingung aufweist, von der die Auslastungsinformationen des Funkzugangsnetzwerks berücksichtigt werden,
wobei die Vielzahl von Intersystemroutingrichtlinienflussverteilungsregeln in Abhängigkeit vom Verkehrstyp verschiedene Prioritäten zum Auslagern von Verkehr zu dem mindestens einen drahtlosen lokalen Zugangsnetzwerk definieren;
Verwenden der Richtliniengültigkeitsbedingungen, um eine der Vielzahl von Intersystemroutingrichtlinienflussverteilungsregeln auf Basis der empfangenen Auslastungsinformationen auszuwählen; und
Anwenden (130) der ausgewählten Intersystemroutingrichtlinienflussverteilungsregel der auslagerungsbezogenen Richtlinie in der Teilnehmereinrichtung, wenn die jeweilige Richtliniengültigkeitsbedingung erfüllt ist, um die Prioritäten zum Auslagern von empfangenem Verkehr in Abhängigkeit vom Verkehrstyp des empfangenen Verkehrs in das mindestens eine drahtlose lokale Zugangsnetzwerk einzustellen.

2. Vorrichtung in einer Teilnehmereinrichtung, wobei die Vorrichtung mindestens einen Prozessor und mindestens einen Speicher umfasst, der Computerprogrammcode umfasst, wobei der mindestens eine Speicher und der Computerprogrammcode dazu ausgelegt sind, die Vorrichtung mit dem mindestens einen Prozessor mindestens zu Folgendem zu veranlassen:
Empfangen (110) von Auslastungsinformationen eines Funkzugangsnetzwerks von einem Netzwerkelement des Funkzugangsnetzwerks;
Empfangen (120) von mindestens einer auslagerungsbezogenen Richtlinie zum Auslagern von Verkehr in mindestens ein drahtloses lokales Zugangsnetzwerk von einem Server mit Zugangsnetzwerkentdeckungs- und -auswahlfunktion, wobei die auslagerungsbezogene Richtlinie Folgendes umfasst: eine Vielzahl von Intersystemroutingrichtlinienflussverteilungsregeln, von denen jede eine Richtliniengültigkeitsbedingung aufweist, von der die Auslastungsinformationen des Funkzugangsnetzwerks berücksichtigt werden,
wobei die Vielzahl von Intersystemroutingrichtlinienflussverteilungsregeln in Abhängigkeit vom Verkehrstyp verschiedene Prioritäten zum Auslagern von Verkehr zu dem mindestens einen drahtlosen lokalen Zugangsnetzwerk definieren;
Verwenden der Richtliniengültigkeitsbedingungen, um eine der Vielzahl von Intersystemroutingrichtlinienflussverteilungsregeln auf Basis der empfangenen Auslastungsinformationen auszuwählen; und
Anwenden (130) der ausgewählten Intersystemroutingrichtlinienflussverteilungsregel der auslagerungsbezogenen Richtlinie in der Teilnehmereinrichtung, wenn die Richtliniengültigkeitsbedingung erfüllt ist, um die Prioritäten zum Auslagern von empfangenem Verkehr in Abhängigkeit vom Verkehrstyp des empfangenen Verkehrs in das mindestens eine drahtlose lokale Zugangsnetzwerk einzustellen.

3. Vorrichtung nach Anspruch 2, wobei Auslastungsinformationen Folgendes umfassen:
eine Anzeige dazu, ob eine Auslastung des ersten Netzwerks hoch, normal oder niedrig ist.

4. Vorrichtung nach einem der Ansprüche 2 bis 3, wobei die auslagerungsbezogene Richtlinie Identifikationsinformationen des mindestens einen drahtlosen lokalen Zugangsnetzwerks und zugehörige Auslastungsinformationen umfasst.

5. Vorrichtung nach einem der Ansprüche 2 bis 4, wobei mindestens zwei auslagerungsbezogene Richtlinien empfangen werden und wobei jeweils nur eine der empfangenen auslagerungsbezogenen Richtlinien angewendet wird.

6. Vorrichtung nach einem der Ansprüche 2 bis 5, wobei das Netzwerkelement des Funkzugangsnetzwerks eine Basisstation ist.

7. Computerprogrammprodukt, das auf einem nichttransitorischen computerlesbaren Medium enthalten ist, wobei das Computerprogrammprodukt dazu ausgelegt ist, einen Prozessor einer Teilnehmereinrichtung zu steuern, um ein Verfahren gemäß den Schritten von Anspruch 1 durchzuführen.

8. Verfahren, das von einem Server mit Zugangsnetzwerkentdeckungs- und -auswahlfunktion durchgeführt wird, wobei das Verfahren Folgendes umfasst:
Übertragen (210) einer Richtlinie zum Auslagern von Verkehr von einem Funkzugangsnetzwerk in mindestens ein drahtloses lokales Netzwerk zu einer Teilnehmereinrichtung, wobei die Richtlinie zum Auslagern von Verkehr Folgendes umfasst: eine Vielzahl von Intersystemroutingrichtlinienflussverteilungsregeln, von denen jede eine Richtliniengültigkeitsbedingung aufweist, von der die Auslastungsinformationen des Funkzugangsnetzwerks berücksichtigt werden, derart, dass die Teilnehmereinrichtung die Richtliniengültigkeitsbedingungen verwenden kann, um auf Basis von empfangenen Auslastungsinformationen eine der Intersystemroutingrichtlinienflussverteilungsregeln auszuwählen,
wobei die Vielzahl von Intersystemroutingrichtlinienflussverteilungsregeln in Abhängigkeit vom Verkehrstyp verschiedene Prioritäten zum Auslagern von Verkehr in das mindestens eine drahtlose lokale Zugangsnetzwerk definieren.

9. Vorrichtung in einem Server mit Zugangsnetzwerkentdeckungs- und -auswahlfunktion, wobei die Vorrichtung mindestens einen Prozessor und mindestens einen Speicher umfasst, der Computerprogrammcode umfasst, wobei der mindestens eine Speicher und der Computerprogrammcode dazu ausgelegt sind, die Vorrichtung mit dem mindestens einen Prozessor mindestens zu Folgendem zu veranlassen:
Übertragen (210) einer Richtlinie zum Auslagern von Verkehr von einem Funkzugangsnetzwerk in mindestens ein drahtloses lokales Netzwerk zu einer Teilnehmereinrichtung, wobei die Richtlinie zum Auslagern von Verkehr Folgendes umfasst: eine Vielzahl von Intersystemroutingrichtlinienflussverteilungsregeln, von denen jede eine Richtliniengültigkeitsbedingung aufweist, von der die Auslastungsinformationen des Funkzugangsnetzwerks berücksichtigt werden, derart, dass die Teilnehmereinrichtung die Richtliniengültigkeitsbedingungen verwenden kann, um auf Basis von empfangenen Auslastungsinformationen eine der Intersystemroutingrichtlinienflussverteilungsregeln auszuwählen,
wobei die Vielzahl von Intersystemroutingrichtlinienflussverteilungsregeln in Abhängigkeit vom Verkehrstyp verschiedene Prioritäten zum Auslagern von Verkehr in das mindestens eine drahtlose lokale Zugangsnetzwerk definieren.

10. Vorrichtung nach Anspruch 9, wobei die auslagerungsbezogene Richtlinie Identifikationsinformationen des mindestens einen drahtlosen lokalen Netzwerks und zugehörige Auslagerungsprioritätsinformationen umfasst.

11. Vorrichtung nach Anspruch 9 oder 10, wobei der mindestens eine Speicher und der Computerprogrammcode dazu ausgelegt sind, mit dem mindestens einen Prozessor die Vorrichtung zu veranlassen, mindestens zwei Richtlinien zum Auslagern von Verkehr zu übertragen, wobei die Richtliniengültigkeitskriterien jeder Richtlinie exklusiv sind und das Anwenden von jeweils nur einer Richtlinie erlauben.

12. Verfahren, das Folgendes umfasst:
Übertragen (110) von Auslastungsinformationen eines Funkzugangsnetzwerks von einem Netzwerkelement des Funkzugangsnetzwerks zu einer Teilnehmereinrichtung;
Übertragen (120, 210) von mindestens einer auslagerungsbezogenen Richtlinie zum Auslagern von Verkehr in mindestens ein drahtloses lokales Zugangsnetzwerk von einem Server mit Zugangsnetzwerkentdeckungs- und -auswahlfunktion zur Teilnehmereinrichtung, wobei die auslagerungsbezogene Richtlinie Folgendes umfasst: eine Vielzahl von Intersystemroutingrichtlinienflussverteilungsregeln, von denen jede eine Richtliniengültigkeitsbedingung aufweist, von der die Auslastungsinformationen des Funkzugangsnetzwerks berücksichtigt werden,
wobei die Vielzahl von Intersystemroutingrichtlinienflussverteilungsregeln in Abhängigkeit vom Verkehrstyp verschiedene Prioritäten zum Auslagern von Verkehr zu dem mindestens einen drahtlosen lokalen Zugangsnetzwerk definieren;
Verwenden der Richtliniengültigkeitsbedingungen an der Teilnehmereinrichtung, um eine der Vielzahl von Intersystemroutingrichtlinienflussverteilungsregeln auf Basis der empfangenen Auslastungsinformationen auszuwählen; und
Anwenden (130) der ausgewählten Intersystemroutingrichtlinienflussverteilungsregel der auslagerungsbezogenen Richtlinie in der Teilnehmereinrichtung an der Teilnehmereinrichtung, wenn die jeweilige Richtliniengültigkeitsbedingung erfüllt ist, um die Prioritäten zum Auslagern von empfangenem Verkehr in Abhängigkeit vom Verkehrstyp des empfangenen Verkehrs in das mindestens eine drahtlose lokale Zugangsnetzwerk einzustellen.

13. System, das Folgendes umfasst:
eine Teilnehmereinrichtung;
ein Netzwerkelement eines Funkzugangsnetzwerks; und
einen Server mit Zugangsnetzwerkentdeckungs- und - auswahlfunktion,
wobei eine erste Vorrichtung am Netzwerkelement mindestens einen Prozessor und mindestens einen Speicher umfasst, der Computerprogrammcode umfasst, wobei der mindestens eine Speicher und der Computerprogrammcode dazu ausgelegt sind, die erste Vorrichtung mit dem mindestens einen Prozessor mindestens zu Folgendem zu veranlassen: Übertragen (110) von Auslastungsinformationen des Funkzugangsnetzwerks zu einer Teilnehmereinrichtung,
wobei eine zweite Vorrichtung am Server mit Zugangsnetzwerkentdeckungs- und -auswahlfunktion mindestens einen Prozessor und mindestens einen Speicher umfasst, der Computerprogrammcode umfasst, wobei der mindestens eine Speicher und der Computerprogrammcode dazu ausgelegt sind, die zweite Vorrichtung mit dem mindestens einen Prozessor mindestens zu Folgendem zu veranlassen: Übertragen (120, 210) von mindestens einer auslagerungsbezogenen Richtlinie zum Auslagern von Verkehr in mindestens ein drahtloses lokales Zugangsnetzwerk von einem Server mit Zugangsnetzwerkentdeckungs- und -auswahlfunktion zur Teilnehmereinrichtung, wobei die auslagerungsbezogene Richtlinie Folgendes umfasst: eine Vielzahl von Intersystemroutingrichtlinienflussverteilungsregeln, von denen jede eine Richtliniengültigkeitsbedingung aufweist, von der die Auslastungsinformationen des Funkzugangsnetzwerks berücksichtigt werden, wobei die Vielzahl von Intersystemroutingrichtlinienflussverteilungsregeln in Abhängigkeit vom Verkehrstyp verschiedene Prioritäten zum Auslagern von Verkehr in das mindestens eine drahtlose lokale Zugangsnetzwerk definieren,
wobei eine dritte Vorrichtung in der Teilnehmereinrichtung mindestens einen Prozessor und mindestens einen Speicher umfasst, der Computerprogrammcode umfasst, wobei der mindestens eine Speicher und der Computerprogrammcode dazu ausgelegt sind, die dritte Vorrichtung mit dem mindestens einen Prozessor mindestens zu Folgendem zu veranlassen: Verwenden der Richtliniengültigkeitsbedingungen, um auf Basis der empfangenen Auslastungsinformationen eine der Vielzahl von Intersystemroutingrichtlinienflussverteilungsregeln auszuwählen; und Anwenden (130) der ausgewählten Intersystemroutingrichtlinienflussverteilungsregel der auslagerungsbezogenen Richtlinie in der Teilnehmereinrichtung, wenn die Richtliniengültigkeitsbedingung erfüllt ist, um die Prioritäten zum Auslagern von empfangenem Verkehr in Abhängigkeit vom Verkehrstyp des empfangenen Verkehrs in das mindestens eine drahtlose lokale Zugangsnetzwerk einzustellen.

## Revendications

1. Procédé réalisé par un équipement utilisateur, comprenant :
la réception (110), d'un élément de réseau d'un réseau d'accès radio, d'informations de charge du réseau d'accès radio ;
la réception (120), d'un serveur de fonction de découverte et de sélection de réseau d'accès, d'au moins une politique liée au délestage pour le délestage du trafic vers au moins un réseau d'accès local sans fil, dans lequel la politique liée au délestage comprend : une pluralité de règles de distribution de flux de politique de routage inter-systèmes ayant chacune une condition de validité de politique qui prend en compte les informations de charge du réseau d'accès radio,
dans lequel la pluralité de règles de distribution de flux de politique de routage inter-systèmes définissent différentes priorités pour le délestage du trafic vers l'au moins un réseau d'accès local sans fil en fonction du type de trafic ;
l'utilisation des conditions de validité de politique pour sélectionner l'une de la pluralité de règles de distribution de flux de politique de routage inter-systèmes sur la base : des informations de charge reçues ; et
l'application (130) de la règle de distribution de flux de politique de routage inter-systèmes sélectionnée de la politique liée au délestage dans l'équipement utilisateur lorsque la condition de validité de politique respective est remplie, pour fixer les priorités pour le délestage du trafic reçu vers l'au moins un réseau d'accès local sans fil en fonction du type de trafic du trafic reçu.

2. Appareil dans un équipement utilisateur, l'appareil comprenant au moins un processeur et au moins une mémoire comprenant un code de programme informatique, l'au moins une mémoire et le code de programme informatique sont configurés pour, avec l'au moins un processeur, amener l'appareil à au moins :
recevoir (110), d'un élément de réseau d'un réseau d'accès radio, des informations de charge du réseau d'accès radio ;
recevoir (120), d'un serveur de fonction de découverte et de sélection de réseau d'accès, au moins une politique liée au délestage pour le délestage du trafic vers au moins un réseau d'accès local sans fil, dans lequel la politique liée au délestage comprend : une pluralité de règles de distribution de flux de politique de routage inter-systèmes ayant chacune une condition de validité de politique qui prend en compte les informations de charge du réseau d'accès radio,
dans lequel la pluralité de règles de distribution de flux de politique de routage inter-systèmes définissent différentes priorités pour le délestage du trafic vers l'au moins un réseau d'accès local sans fil en fonction du type de trafic ;
utiliser les conditions de validité de politique pour sélectionner l'une de la pluralité de règles de distribution de flux de politique de routage inter-systèmes sur la base des informations de charge reçues ; et
appliquer (130) la règle de distribution de flux de politique de routage inter-systèmes sélectionnée de la politique liée au délestage dans l'équipement utilisateur lorsque la condition de validité de politique est remplie, pour fixer les priorités pour le délestage du trafic reçu to l'au moins un réseau d'accès local sans fil en fonction du type de trafic du trafic reçu.

3. Appareil selon la revendication 2, dans lequel les informations de charge comprennent : une indication précisant si une charge du premier réseau est élevée, normale ou faible.

4. Appareil selon l'une des revendications 2 et 3, dans lequel la politique liée au délestage comprend des informations d'identification de l'au moins un réseau d'accès local sans fil et des informations relatives à la charge.

5. Appareil selon l'une des revendications 2 à 4, dans lequel au moins deux politiques liées au délestage sont reçues, et dans lequel une seule des politiques liées au délestage reçues est appliquée à la fois.

6. Appareil selon l'une des revendications 2 à 5, dans lequel l'élément de réseau du réseau d'accès radio est une station de base.

7. Produit de programme informatique incorporé sur un support non transitoire lisible par ordinateur, le produit de programme informatique étant configuré pour commander un processeur d'un équipement utilisateur pour réaliser un procédé selon les étapes selon la revendication 1.

8. Procédé réalisé par un serveur de fonction de découverte et de sélection de réseau d'accès, le procédé comprenant :
la transmission (210), à un équipement utilisateur, d'une politique pour le délestage du trafic à partir d'un réseau d'accès radio à au moins un réseau local sans fil, dans lequel la politique pour le délestage du trafic comprend : une pluralité de règles de distribution de flux de politique de routage inter-systèmes ayant chacune une condition de validité de politique qui prend en compte les informations de charge du réseau d'accès radio, de sorte que l'équipement utilisateur puisse utiliser les conditions de validité de politique pour sélectionner l'une de la pluralité de règles de distribution de flux de politique de routage inter-systèmes sur la base d'informations de charge reçues,
dans lequel la pluralité de règles de distribution de flux de politique de routage inter-systèmes définissent différentes priorités pour le délestage du trafic vers l'au moins un réseau d'accès local sans fil en fonction du type de trafic.

9. Appareil dans un serveur de fonction de découverte et de sélection de réseau d'accès, l'appareil comprenant au moins un processeur et au moins une mémoire comprenant un code de programme informatique, l'au moins une mémoire et le code de programme informatique sont configurés pour, avec l'au moins un processeur, amener l'appareil à au moins :
transmettre (210), à un équipement utilisateur, une politique pour le délestage du trafic à partir d'un réseau d'accès radio à au moins un réseau local sans fil, dans lequel la politique pour le délestage du trafic comprend : une pluralité de règles de distribution de flux de politique de routage inter-systèmes ayant chacune une condition de validité de politique qui prend en compte les informations de charge du réseau d'accès radio, de sorte que l'équipement utilisateur puisse utiliser les conditions de validité de politique pour sélectionner l'une de la pluralité de règles de distribution de flux de politique de routage inter-systèmes sur la base d'informations de charge reçues,
dans lequel la pluralité de règles de distribution de flux de politique de routage inter-systèmes définissent différentes priorités pour le délestage du trafic vers l'au moins un réseau d'accès local sans fil en fonction du type de trafic.

10. Appareil selon la revendication 9, dans lequel la politique liée au délestage comprend des informations d'identification de l'au moins un réseau local sans fil et des informations de priorité de délestage associées.

11. Appareil selon la revendication 9 ou 10, dans lequel l'au moins une mémoire et le code de programme informatique sont configurés pour, avec l'au moins un processeur, amener l'appareil à transmettre au moins deux politiques pour le délestage du trafic, dans lequel les critères de validité de politique de chaque politique sont exclusifs et ne permettent d'appliquer qu'une seule politique à la fois.

12. Procédé comprenant :
la transmission (110), à partir d'un élément de réseau d'un réseau d'accès radio à un équipement utilisateur, d'informations de charge du réseau d'accès radio ;
la transmission (120, 210), à partir d'un serveur de fonction de découverte et de sélection de réseau d'accès à l'équipement utilisateur, au moins une politique liée au délestage pour le délestage du trafic vers au moins un réseau d'accès local sans fil, dans lequel la politique liée au délestage comprend : une pluralité de règles de distribution de flux de politique de routage inter-systèmes ayant chacune une condition de validité de politique qui prend en compte les informations de charge du réseau d'accès radio,
dans lequel la pluralité de règles de distribution de flux de politique de routage inter-systèmes définissent différentes priorités pour le délestage du trafic vers l'au moins un réseau d'accès local sans fil en fonction du type de trafic ;
utiliser, au niveau de l'équipement utilisateur, les conditions de validité de politique pour sélectionner l'une de la pluralité de règles de distribution de flux de politique de routage inter-systèmes sur la base : des de charge reçues ; et
appliquer (130), au niveau de l'équipement utilisateur, la règle de distribution de flux de politique de routage inter-systèmes sélectionnée de la politique liée au délestage dans l'équipement utilisateur lorsque la condition de validité de politique respective est remplie, pour fixer les priorités pour le délestage du trafic reçu à l'au moins un réseau d'accès local sans fil en fonction du type de trafic du trafic reçu.

13. Système comprenant :
un équipement utilisateur ;
un élément de réseau d'un réseau d'accès radio ; et
un serveur de fonction de découverte et de sélection de réseau d'accès,
dans lequel un premier appareil dans l'élément de réseau comprend au moins un processeur et au moins une mémoire comprenant un code de programme informatique, l'au moins une mémoire et le code de programme informatique sont configurés pour, avec l'au moins un processeur, amener le premier appareil à au moins : transmette (110), à un équipement utilisateur, des informations de charge du réseau d'accès radio,
dans lequel un deuxième appareil dans le serveur de fonction de découverte et de sélection de réseau d'accès comprenant au moins un processeur et au moins une mémoire comprenant un code de programme informatique, l'au moins une mémoire et le code de programme informatique sont configurés pour, avec l'au moins un processeur, amener le deuxième appareil à au moins : transmette (120, 210), à l'équipement utilisateur, au moins une politique liée au délestage pour le délestage du trafic vers au moins un réseau d'accès local sans fil, dans lequel la politique liée au délestage comprend : une pluralité de règles de distribution de flux de politique de routage inter-systèmes ayant chacune une condition de validité de politique qui prend en compte les informations de charge du réseau d'accès radio, dans lequel la pluralité de règles de distribution de flux de politique de routage inter-systèmes définissent différentes priorités pour le délestage du trafic vers l'au moins un réseau d'accès local sans fil en fonction du type de trafic,
dans lequel un troisième appareil dans l'équipement utilisateur comprenant au moins un processeur et au moins une mémoire comprenant un code de programme informatique, l'au moins une mémoire et le code de programme informatique sont configurés pour, avec l'au moins un processeur, amener le troisième appareil à au moins : utiliser les conditions de validité de politique pour sélectionner l'une de la pluralité de règles de distribution de flux de politique de routage inter-systèmes sur la base de : le informations de charge reçues ; et appliquer (130) la règle de distribution de flux de politique de routage inter-systèmes sélectionnée de la politique liée au délestage dans l'équipement utilisateur lorsque la condition de validité de politique respective est remplie, pour fixer les priorités pour le délestage du trafic reçu à l'au moins un réseau d'accès local sans fil en fonction du type de trafic du trafic reçu.
